(19) Europäisches Patentamt
European Patent Office
Office européen des brevets

(11) **EP 3 487 357 B1**

(12) **FASCICULE DE BREVET EUROPEEN**

(45) Date de publication et mention
de la délivrance du brevet:
**26.04.2023 Bulletin 2023/17**

(21) Numéro de dépôt: **17757789.7**

(22) Date de dépôt: **18.07.2017**

(51) Classification Internationale des Brevets (IPC):
*A46D 1/00* *(2006.01)*      *A46B 9/02* *(2006.01)*

(52) Classification Coopérative des Brevets (CPC):
**A46B 9/021; A46D 1/0261;** A46B 2200/1053

(86) Numéro de dépôt international:
**PCT/FR2017/051953**

(87) Numéro de publication internationale:
**WO 2018/015652 (25.01.2018 Gazette 2018/04)**

(54) **APPLICATEUR DE PRODUIT COSMETIQUE**

APPLIKATOR FÜR EIN KOSMETIKUM

COSMETIC PRODUCT APPLICATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2016 FR 1656879**

(43) Date de publication de la demande:
**29.05.2019 Bulletin 2019/22**

(73) Titulaire: **Chanel Parfums Beauté**
**92200 Neuilly-sur-Seine (FR)**

(72) Inventeur: **SALCIARINI, Christian**
**83400 Hyeres (FR)**

(74) Mandataire: **Santarelli**
**49, avenue des Champs-Elysées**
**75008 Paris (FR)**

(56) Documents cités:
**EP-A2- 1 070 465      WO-A2-2012/166777**
**CA-C- 2 218 740      JP-A- 2014 004 084**

**Description**

L'invention concerne les applicateurs de produit cosmétique.

Un article de mascara, ou « mascara », comprend classiquement un étui, un réservoir de mascara et un applicateur. Il existe plusieurs types d'applicateurs, ceux de type goupillon, ceux injectés et ceux fabriqués par synthèse additive. Un applicateur de type goupillon comporte une brosse qui comprend des poils formés par des fibres emprisonnées dans un fil métallique torsadé formant l'âme de l'applicateur. Un applicateur injecté est d'une seule pièce et comporte des poils ou des dents en matière plastique par exemple. Un applicateur fabriqué par synthèse additive est lui aussi généralement d'une seule pièce et peut être formé par exemple à partir d'une poudre de polymères thermoplastiques. De tels applicateurs donnent des résultats satisfaisants pour l'utilisatrice. Mais cette dernière est toujours à la recherche de meilleurs effets de maquillage.

Le document WO2012166777 divulgue un applicateur de produit mascara comprenant des crins ou des dents dotés d'un duromètre pouvant être sélectivement changé pour permettre à l'utilisateur d'ajuster la souplesse ou la rigidité relatives. Les crins ou les dents sont fabriqués directement à partir de fibres céramiques piézoélectriques ou incorporent celles-ci dans leur structure. Les parties en céramique ou en polymère de de l'applicateur qui présentent des propriétés piézoélectriques peuvent être obtenues par des méthodes de fabrication additive.

Un but de l'invention est donc d'améliorer les applicateurs de produit cosmétique.

A cet effet, on prévoit selon l'invention un procédé de fabrication d' un applicateur de produit cosmétique tel que défini dans la revendication 1. Des modes de réalisations préférés sont mentionnés dans les revendications dépendantes. L'applicateur de produit cosmétique obtenu par le procédé de fabrication selon l'invention comprend une hauteur moyenne arithmétique $S_a$ d'une surface de l'applicateur sur au moins une portion A de l'applicateur est comprise ente 15,0 et 30,0 $\mu$m, cette hauteur étant calculée suivant la formule suivante :

$$S_a = \frac{1}{A} \iint\limits_A |z(x, y)| \, \mathrm{d}x\mathrm{d}y$$

dans laquelle :

A est la portion de l'applicateur prise en compte, et
x, y et z représentent les coordonnées de la surface de l'applicateur dans un système orthogonal de coordonnées cartésiennes avec z correspondant à un axe de mesure de la hauteur.

Cette hauteur moyenne arithmétique $S_a$ est calculée conformément à la norme ISO 25178.

Les surfaces des zones de maquillage du corps sur lesquelles les produits cosmétiques sont délivrés ont généralement un état de surface dont la rugosité est de l'ordre du $\mu$m. Une surface d'un applicateur présentant une hauteur moyenne arithmétique $S_a$ selon l'invention possède une rugosité qui lui permet d'augmenter son état de surface par rapport aux applicateurs classiques et donc d'augmenter ses interactions avec la zone à maquiller, par exemple la peau, les cils, les sourcils ou les lèvres de l'utilisatrice. L'augmentation de ces interactions permet un meilleur transfert de produit depuis la surface de l'applicateur vers la surface à maquiller, ce qui facilite l'opération de maquillage, notamment en évitant la répétition des mêmes gestes.

L'ordre de grandeur de la hauteur moyenne arithmétique $S_a$ d'un applicateur selon invention correspond donc à celui des cils, des sourcils, des poils et de l'épiderme, ce qui permet d'améliorer les frottements de contact entre l'applicateur et les zones de maquillage.

La hauteur moyenne arithmétique $S_a$ de la surface de l'applicateur sur la portion A est comprise entre 15,0 et 30,0 $\mu$m.

Ces valeurs offrent un bon compromis entre l'effet bénéfique recherché et les coûts nécessaires à l'obtention de ces caractéristiques.

Avantageusement, une hauteur maximale de fosse $S_v$ de la surface de l'applicateur sur la portion A de l'applicateur est inférieure à 200 $\mu$m, et de préférence comprise entre 80 et 150 $\mu$m.

Ainsi, on évite la présence de trop grandes cavités qui sont susceptibles de piéger du produit. Une partie de ce dernier serait dans ce cas perdue car il ne servirait pas au maquillage. En outre, cette accumulation de produit dans ces cavités est susceptible de rendre l'applicateur moins efficace et entraine une usure précoce de l'applicateur. Un applicateur selon l'invention possède donc une plus grande durée de vie.

De manière avantageuse, un rapport de surface interfaciale développée $S_{dr}$ de la surface de l'applicateur sur la portion A de l'applicateur calculé suivant la formule :

$$S_{dr} = \frac{1}{A} \left[ \iint_A \left( \sqrt{\left[ 1 + \left( \frac{\partial z(x,y)}{\partial x} \right)^2 + \left( \frac{\partial z(x,y)}{\partial y} \right)^2 \right]} - 1 \right) \mathrm{d}x\mathrm{d}y \right]$$

est supérieur à 70%, de préférence supérieur à 100%.

Cette caractéristique traduit le fait que la surface de l'applicateur est augmentée et crée donc une surface de contact plus importante avec la zone de maquillage et donc un transfert plus efficace de produit entre l'applicateur et cette zone de maquillage.

Préférentiellement, l'applicateur est un applicateur de produit cosmétique pour les cils, les sourcils, les lèvres ou la peau.

On peut par exemple envisager que l'applicateur soit un applicateur de mascara, un applicateur de rouge à lèvres ou de gloss, ou encore un eyeliner.

L'applicateur comprend un corps et des protubérances, la portion A comprenant une ou plusieurs protubérances ou parties de protubérances.

En effet, ce sont ces parties qui sont destinées à entrer principalement en contact avec la zone de maquillage et donc celles qui devraient de préférence présenter des caractéristiques d'état de surface telles que décrites dans cette demande. On peut bien entendu prévoir que ces caractéristiques concernent également d'autres portions de l'applicateur, par exemple au corps de l'applicateur qui peut parfois être lui aussi amené à avoir un rôle de maquillage.

L'applicateur est fabriqué par synthèse additive, de préférence par fusion sur lit de poudre.

On prévoit selon l'invention un procédé de fabrication d'un applicateur de produit cosmétique par fusion sur lit de poudre, mis en oeuvre de façon à obtenir un applicateur pour lequel une hauteur moyenne arithmétique $S_a$ d'une surface de l'applicateur sur au moins une portion A de l'applicateur est strictement supérieure à 10,0 $\mu$m, cette hauteur étant calculée suivant la formule suivante :

$$S_a = \frac{1}{A} \iint_A |z(x,y)| \, \mathrm{d}x\mathrm{d}y$$

dans laquelle :

A est la portion de l'applicateur prise en compte, et

x, y et z représentent les coordonnées de la surface de l'applicateur dans un système orthogonal de coordonnées cartésiennes avec z correspondant à un axe de mesure de la hauteur.

Les avantages de ces caractéristiques sont les mêmes que ceux qui ont été présentés précédemment en référence à l'applicateur. Notamment, elles permettent un meilleur contrôle de l'état de surface final de l'applicateur.

Un procédé de fusion sur lit de poudre consiste à produire des objets à partir de matériaux en poudre à l'aide d'un ou plusieurs lasers afin de faire fondre de façon sélective les particules de poudre à la surface du lit de poudre, couche après couche, dans une chambre fermée. Le type de poudre utilisée peut être tout type de poudre apte à être utilisé dans un tel procédé.

L'applicateur est fabriqué par des méthodes de fabrications additives à base de poudre. La fabrication par fusion sur lit de poudre est une des méthodes de fabrication additive à base de poudre pouvant être utilisée pour fabriquer l'applicateur. Il est également possible de procéder via une méthode par liage de poudre. Un procédé de liage de poudre consiste à produire des objets à partir de matériaux en poudre à l'aide d'un agent de liaison ou de liant afin de consolider de façon sélective les particules de poudre à la surface du lit de poudre. Le type de poudre utilisée peut être tout type apte à être utilisé dans un tel procédé.

On peut prévoir que la hauteur moyenne arithmétique d'une surface de l'applicateur est comprise entre 15,0 $\mu$m et 30,0 $\mu$m.

Le procédé comprend au moins une étape de sélections de grains de poudre dont une plus grande dimension est inférieure à 80 $\mu$m.

Ainsi, cette étape de sélection qui est réalisée sur la poudre, donc avant la formation de l'applicateur (pré-traitement), permet de mieux contrôler l'état de surface final de l'applicateur et permet notamment de réduire la rugosité de l'applicateur. On peut envisager qu'on ne sélectionne que les grains ayant une plus grande dimension de préférence inférieure à 70 $\mu$m, par exemple inférieure à 60,0 $\mu$m, voire inférieure à 50,0 $\mu$m.

De préférence, la sélection des grains est effectuée par tamisage.

Plusieurs types de tamisage peuvent être envisagés afin de séparer les grains ayant une plus grande dimension supérieure à 80,0 μm des autres grains. On peut par exemple utiliser un tamisage par ultrasons, par micro-vibration et/ou par soufflage.

De manière avantageuse, le procédé comprend au moins une étape de sablage.

Une telle étape permet elle aussi de mieux contrôler l'état de surface final de l'applicateur. Ce sablage est généralement réalisé en post-traitement, c'est-à-dire après que l'applicateur ait été formé. Ce sablage permet notamment de nettoyer l'applicateur en utilisant un medium abrasif (microbilles, bicarbonate, noyaux de fruits compressés...).

De manière préférée, le sablage est réalisé dans une cabine de sablage automatique par tonneau, de préférence le sablage étant réalisé par microbillage.

A nouveau, cette caractéristique permet de mieux contrôler l'état de surface final de l'applicateur.

De préférence encore, des media abrasifs dont des grains présentent une plus grande dimension comprise entre 4,0 et 140,0 μm sont utilisées. On peut envisager l'utilisation de media abrasifs ayant des grains dont une plus grande dimension comprise entre 40,0 et 100,0 μm, par exemple entre 60,0 et 80,0 μm. De manière avantageuse, les media abrasifs utilisés sont choisis parmi au moins :

- des microbilles, par exemple des microbilles de verres ou de céramiques ;
- du bicarbonate de soude ; ou
- des noyaux de fruits compressés.

L'étape de sablage est réalisée, de manière préférentielle jusqu'à 1000 brosses, dans un tonneau tournant comportant une buse projetant des billes de silice de 4 à 45 μm sous une pression comprise entre 5 bars ($5.10^5$ Pa) et 7 bars ($7.10^5$ Pa), de préférence 6 bars ($6.10^5$ Pa) pendant au moins 20 minutes, voire 30 minutes.

La distance de la buse vis-à-vis du fond du tonneau est un paramètre à considérer. Ici, la buse se situe à 350 mm du fond.

Le tonneau tournant comprend également une buse latérale, permettant de décoller les brosses du fond afin d'améliorer leur brassage. La pression de la buse latérale se situe entre 2 bars ($2.10^5$ Pa) et 4 bars ($4.10^5$ Pa), et est de préférence de 3 bars ($3.10^5$ Pa).

Les brosses tournent à une vitesse déterminée dans le tonneau. Cette dernière est comprise entre 3 et 6 tr/min, de préférence 4 tr/min.

Avantageusement, une étape de soufflage est réalisée avant l'étape de sablage, dans le tonneau de la machine de sablage avec les brosses en rotation. Cette étape de soufflage permet d'éliminer le plus gros des particules de matière (PA 11) avant l'étape de sablage.

Optionnellement, le procédé comprend une étape alternative de nettoyage par ultrasons.

Ainsi, on peut contrôler de manière plus fine la rugosité de l'applicateur. En outre, il est ainsi possible de moduler la rugosité en fonction du type d'applicateur que l'on souhaite produire.

De manière avantageuse, les ultrasons utilisés présentent une fréquence comprise entre 25 kHz et 45 kHz.

Cette gamme de fréquence donne des résultats de nettoyage particulièrement satisfaisants. Les ultrasons sont généralement appliqués en post-traitement après avoir plongé l'applicateur dans une solution appropriée, par exemple une solution à 50% d'alcool isopropylique. Bien entendu, d'autres solutions peuvent être utilisées.

De préférence, la poudre est choisie parmi les polymères thermoplastiques de la famille des polyamides aliphatiques.

Bien entendu, plusieurs types de poudre peuvent être utilisées, seuls ou mélangés.

Nous allons maintenant présenter des modes de réalisation de l'invention à titre d'exemples non limitatifs en référence aux dessins sur lesquels :

- la figure 1 est une vue en perspective d'un mode de réalisation d'un applicateur selon l'invention ;
- les figures 2A et 2B sont des vues en perspectives d'une extrémité libre respectivement d'un applicateur selon un mode de réalisation de l'invention et d'un applicateur en silicone réalisé par injection ;
- la figure 3 est un diagramme d'un mode de réalisation du procédé selon l'invention ;

- les figures 4A, 5A et 6A sont des visualisations en trois dimensions respectivement d'un applicateur en matière plastique fabriqué par injection, d'un applicateur selon l'invention pour lequel il n'y a pas eu d'étape de sablage lors de sa fabrication par synthèse additive et d'un applicateur selon l'invention pour lequel il y a eu une étape de sablage lors de sa fabrication par synthèse additive.
- les figures 4B à 4D, 5B à 5D et 6B à 6D sont des graphiques représentant le profil de rugosité des applicateurs respectifs des figures 4A, 5A et 6A.

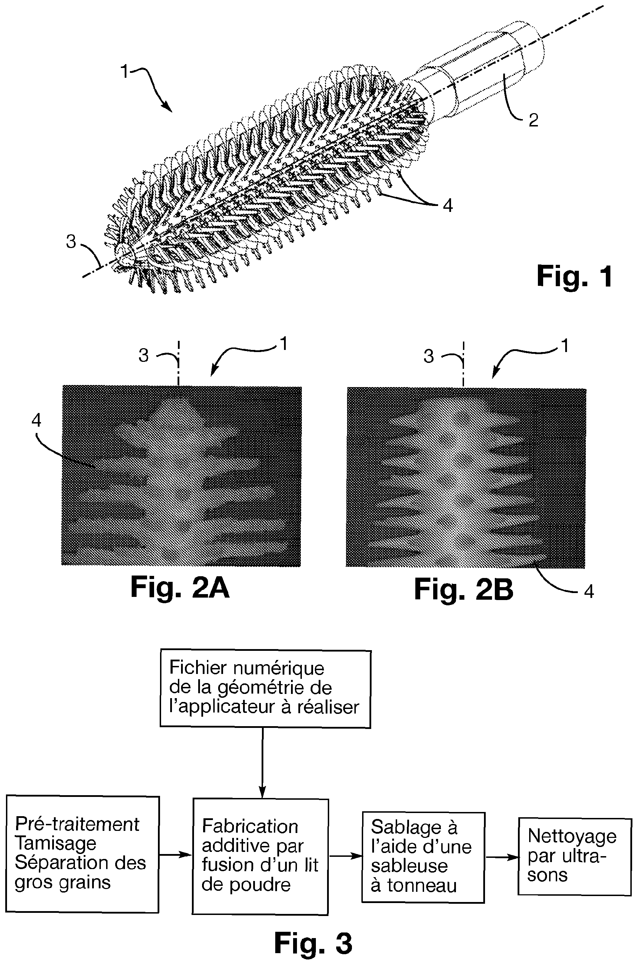

Nous allons maintenant présenter des modes de réalisation de l'applicateur et du procédé selon l'invention en référence aux figures 1 à 6D. Nous allons décrire ici un applicateur de mascara mais on peut bien entendu prévoir qu'il s'agisse d'un autre applicateur de produit cosmétique, par exemple un applicateur de produit cosmétique pour les lèvres, les sourcils ou la peau.

L'applicateur 1 de mascara selon l'invention est porté par une tige 2 qui, dans un article de cosmétique, relie l'applicateur à un capuchon. L'applicateur a une forme générale ovoïde allongée suivant son axe longitudinal 3. La tige présente une forme générale rectiligne cylindrique et son axe longitudinal est confondu avec l'axe longitudinal 3 de l'applicateur. La tige et l'applicateur sont reliés par une de leurs extrémités (voir figure 1).

L'applicateur 1 peut présenter d'autres formes générales, par exemple une forme générale sphérique, parallélépipédique, curviligne ou encore cubique.

L'applicateur comprend un corps ou une âme à partir duquel s'étendent des protubérances 4. On peut bien entendu prévoir que l'applicateur selon l'invention soit un applicateur dépourvu d'âme. Ces protubérances forment ici des rangées parallèles à l'axe et des couronnes situées dans des plans perpendiculaires à l'axe.

Le procédé de fabrication est réalisé en suivant les étapes décrites dans le diagramme de la figure 3. Bien entendu, d'autres étapes peuvent s'ajouter à ce procédé et certaines étapes peuvent être substituées par une autre.

Il s'agit ici d'un procédé de fabrication d'un applicateur de mascara par synthèse additive, plus particulièrement, il s'agit d'un procédé de fusion sur lit de poudre. Ce procédé consiste à produire des objets à partir de matériaux en poudre à l'aide d'un ou plusieurs lasers afin de faire fondre de façon sélective les particules de poudre à la surface du lit de poudre, couche après couche, dans une chambre fermée. Dans le mode de réalisation présenté, le type de poudre utilisé fait partie des polymères thermoplastiques de la famille des polyamides aliphatique. On peut notamment citer les poudres de polyamides PA11 ou PA12. Bien entendu, plusieurs autres types de poudre peuvent être utilisés, seuls ou mélangés.

Afin de contrôler l'état de surface final de l'applicateur et de lui donner les caractéristiques recherchées, un pré-traitement est effectué sur la poudre afin de ne pas prendre en compte les grains de poudre dont une plus grande dimension est supérieure à 80,0 $\mu$m. Dans le cas présent, ce pré-traitement comprend un tamisage de la poudre réalisé avant l'utilisation de la poudre dans une machine de fusion sur lit de poudre classique. Ici, un tamisage par ultrasons est utilisé. Bien entendu, toute technique de tamisage apte à sélectionner les grains de poudre dont une plus grande dimension est inférieure à 80,0 $\mu$m peut être utilisée. La sélection de ces grains permet donc de mieux contrôler la rugosité finale de la surface de l'applicateur.

La poudre ainsi tamisée subit ensuite une fusion sur lit de poudre classique. Pour cela, la machine de synthèse additive utilise un fichier numérique représentant géométriquement l'applicateur. Le fichier est obtenu après avoir conçu l'applicateur sur un logiciel de conception assisté par ordinateur (CAO). Ce fichier peut être au format STL ou tout autre format de fichier standard utilisable pour une synthèse additive par fusion sur lit de poudre. Le fichier est ensuite traité par un logiciel fourni par le constructeur de la machine utilisée pour la synthèse additive. Ce logiciel découpe en sections le fichier sous la forme d'une centaine d'images numériques au format SLI ou BFF, chacune d'elles correspondant à une couche du modèle à imprimer, c'est-à-dire à une section de l'applicateur prise dans un plan perpendiculaire à son axe longitudinal. Ces données sont ensuite transmise à l'imprimante afin qu'elle produise l'applicateur.

Afin d'obtenir un applicateur ayant un état de surface proche des gammes préférées, des étapes de post-traitement consécutives à la synthèse de l'applicateur sont réalisées.

Dans le cas présent, une étape de sablage est réalisée dans une cabine de sablage par microbillage automatique à tonneau afin de nettoyer les applicateurs réalisés, en utilisant un abrasif. Ici, des microbilles de verre de diamètre compris entre 4,0 et 140,0 $\mu$m sont utilisées. Cette technique permet d'obtenir des applicateurs avec les caractéristiques recherchées. Bien entendu, d'autres techniques de sablage peuvent être utilisées.

L'étape de sablage est réalisée, de manière préférentielle jusqu'à 1000 brosses, dans un tonneau tournant comportant une buse projetant des billes de silice de 4 à 45 $\mu$m sous une pression comprise entre 5 ($5.10^5$ Pa) et 7 bars ($7.10^5$ Pa), de préférence 6 ($6.10^5$ Pa) bars pendant au moins 20 minutes, de préférences 30 minutes.

La distance de la buse vis-à-vis du fond du tonneau est ici de 350 mm.

Le tonneau tournant comprend également une buse latérale, permettant de décoller les brosses du fond afin d'améliorer leur brassage. La pression de la buse latérale est comprise entre 2 bars ($2.10^5$ Pa) et 4 bars ($4.10^5$ Pa), et est de préférence de 3 bars ($3.10^5$ Pa).

Les brosses tournent à une vitesse déterminée dans le tonneau. Cette dernière est comprise entre 3 et 6 tr/min, de préférence 4 tr/min.

Avantageusement, une étape de soufflage est réalisée avant l'étape de sablage, dans le tonneau de la machine de sablage avec les brosses en rotation. Cette étape de soufflage permet d'éliminer le plus gros des particules de matière (PA 11) avant l'étape de sablage

Afin d'affiner le contrôle de la rugosité, un nettoyage par ultrasons est ensuite effectué. Pour cela, l'applicateur est plongé dans une solution à 50% d'alcool isopropylique et des ultrasons compris entre 25 kHz et 45 kHz sont appliqués. Bien entendu, d'autres techniques de nettoyage peuvent être utilisées.

Cette étape de nettoyage spécifique est optionnelle et on peut envisager qu'il y ait simplement une étape de nettoyage classique incluse dans le cycle de sablage. Cela présente l'avantage de ne pas nécessité d'opération supplémentaire. En outre, cela présente l'avantage d'être réalisé en milieu sec.

On peut également envisager, de façon additionnelle ou alternative, un tamisage sous micro-vibration et/ou soufflage. Cela présente également l'avantage d'être réalisé en milieu sec.

Enfin, on peut également envisager un nettoyage en milieu aqueux.

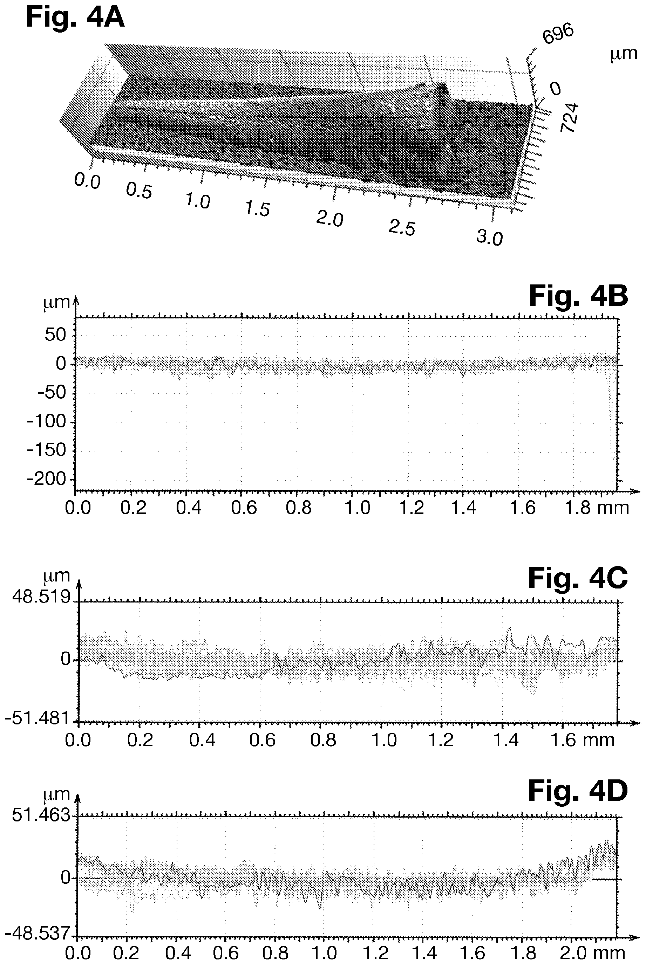

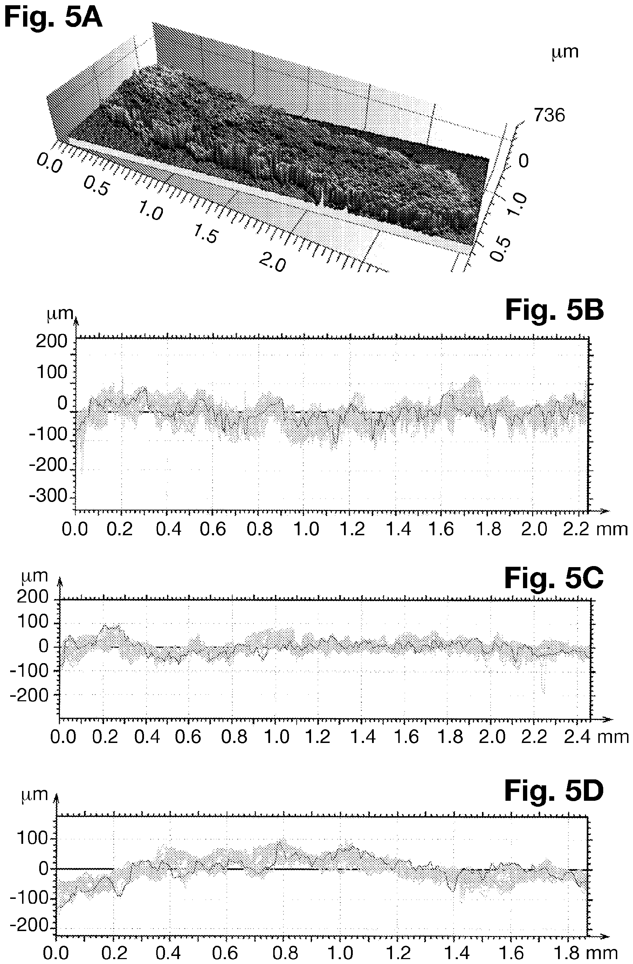

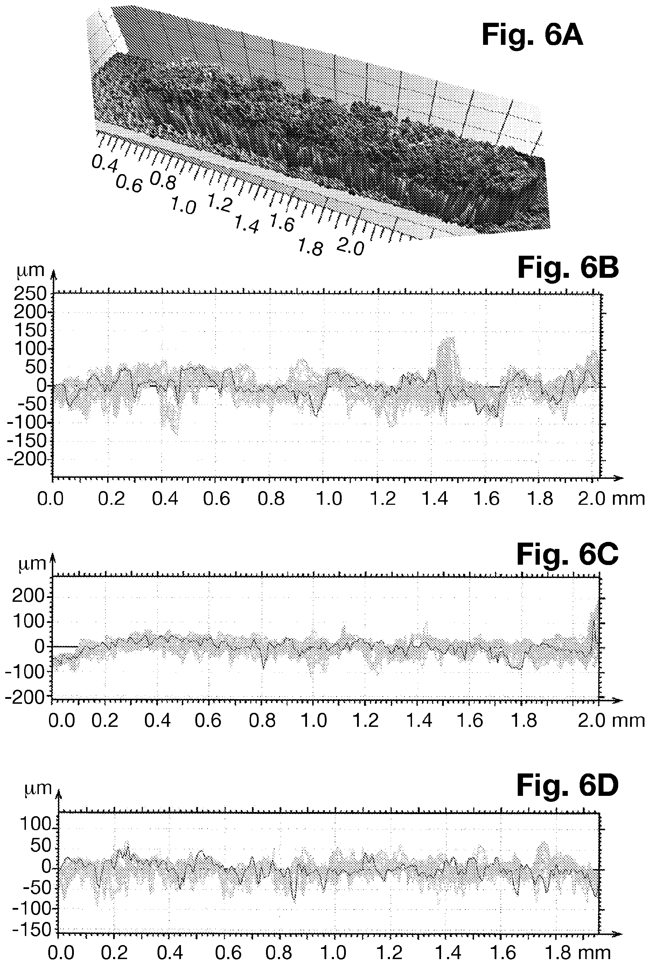

Les caractéristiques d'état de surface de l'applicateur issu du procédé ci-dessus sont mesurées à l'aide d'une machine AltiSurf 520 commercialisée par Altimet équipée d'une sonde CL4. La mesure repose sur le principe de la confocal-chromatique qui est une méthode de mesure sans contact et les tests ont été menés conformément à la norme ISO 25178. Les mesures ont été effectuées sur les protubérances de trois applicateurs différents. Un premier applicateur servant de témoin est en matière plastique et a été réalisé par injection (voir figures 4A à 4D). Un deuxième applicateur a été fabriqué selon le procédé décrit ci-dessus mais n'a pas subi d'étape de post-traitement (voir figures 5A à 5D). Enfin, un troisième applicateur a été fabriqué selon le procédé décrit ci-dessus avec l'étape de sablage et de nettoyage par ultrasons (voir figures 6A à 6D). Chaque surface à tester est balayée par la sonde qui effectue un relevé point par point selon un pas en x et en y de 4 $\mu$m. L'exposition lumineuse est fixée par la fréquence de mesure fixée à 200 Hz dans le cas présent.

Sur les graphiques des figures 4B à 4D, 5B à 5D et 6B à 6D représentant le profil de rugosité des applicateurs, l'ordonnée correspond à la hauteur, exprimée en micromètre, et l'abscisse correspond à la longueur de l'applicateur sur la partie de l'applicateur prise en compte.

Les valeurs de hauteur moyenne arithmétique $S_a$ sur une portion A de la surface de l'applicateur, ainsi que les valeurs de rapports de surface interfaciale développée $S_{dr}$ ont été calculées avec les formules suivantes :

$$S_a = \frac{1}{A} \iint\limits_A |z(x,y)|\, \mathrm{d}x\mathrm{d}y$$

$$S_{dr} = \frac{1}{A}\left[\iint\limits_A \left(\sqrt{\left[1 + \left(\frac{\partial z(x,y)}{\partial x}\right)^2 + \left(\frac{\partial z(x,y)}{\partial y}\right)^2\right]} - 1\right)\mathrm{d}x\mathrm{d}y\right]$$

dans lesquelles :

A est la portion de l'applicateur prise en compte, et
x, y et z représentent les coordonnées de la surface de l'applicateur dans un système orthogonal de coordonnées cartésiennes avec z correspondant à un axe de mesure de la hauteur.

En outre, la hauteur maximale de fosse $S_v$ a également été mesurée.

Les résultats de ces mesures sont présentés dans le Tableau I ci-dessous :

| | $S_a$ (en $\mu$m) | $S_{dr}$ (en %) | $S_v$ (en $\mu$m) |
|---|---|---|---|
| Applicateur en fabrication additive sans post-traitement en sortie de machine | 21 | 318 | 211 |
| | 29.5 | 168 | 200 |
| | 29.6 | 151 | 152 |
| Applicateur en fabrication additive avec post-traitement | 26 | 227 | 130 |
| | 15.5 | 182 | 92 |
| | 22.9 | 203 | 124 |
| Applicateur en plastique par fabrication par injection | 6.85 | 62 | 172 |
| | 5.99 | 59.4 | 30 |
| | 6.99 | 59.9 | 31.8 |

Pour chaque cas, trois échantillons ont été utilisés. Ces trois échantillons correspondent aux trois graphiques respectifs des trois conditions (voir figures 4B à 4D, 5B à 5D et 6B à 6D).

Ces résultats montrent que le procédé décrit ci-dessus permet d'obtenir des applicateurs dont une surface des protubérances présente une hauteur moyenne arithmétique $S_a$ strictement supérieure à 10,0 $\mu$m. Plus particulièrement, ce procédé permet d'obtenir des hauteurs moyennes arithmétiques situés dans la gamme de 15,0 à 30,0 $\mu$m.

En outre, ces résultats montrent que le procédé décrit ci-dessus permet d'obtenir des applicateurs dont une surface des protubérances présente un rapport de surface interfaciale développée $S_{dr}$ supérieur à 70%. Plus particulièrement, les rapports de surface interfaciale développée sont compris entre 151% et 318%. On remarque que de telles valeurs ne sont pas obtenues pour des applicateurs en matière plastique fabriqués par injection. On remarque également que l'utilisation d'un post-traitement semble permettre de mieux maitriser la valeur obtenue qui est alors proche de 200%.

Enfin, ces résultats montrent que le procédé décrit ci-dessus permet d'obtenir des applicateurs pour lesquels une hauteur maximale de fosse $S_v$, aussi appelée hauteur de creux, est inférieure à 200 $\mu$m. Plus particulièrement, ce procédé permet d'obtenir une hauteur maximale de fosse $S_v$ comprise entre 80 et 150 $\mu$m. On remarque en effet que dans le cas des applicateurs fabriqués selon le procédé revendiqué, quatre des six échantillons testés sont situés dans les valeurs préférées, alors que c'est le cas pour un seul des trois échantillons pour les applicateurs fabriqués par injection.

Ainsi, le procédé tel que décrit ci-dessus a permis d'obtenir des applicateurs pour lesquels les valeurs d'hauteur moyenne arithmétique $R_a$ de la surface de l'applicateur, d'hauteur maximale de fosse Sv, et de rapport de surface interfaciale développé de la surface de l'applicateur sont comprises dans les gammes de valeurs préférées respectives.

On obtient donc un applicateur particulièrement avantageux puisque ses caractéristiques d'état de surface lui permettent d'être suffisamment rugueux pour se charger en une quantité suffisante de produit cosmétique lorsqu'il est plongé dans un réservoir de mascara, et pas trop rugueux de façon à faciliter le transfert du mascara vers la zone à maquiller et à assurer un confort d'utilisation pour l'utilisatrice. En outre, les valeurs de rapport de surface interfaciale obtenues permettent d'optimiser les échanges entre l'applicateur et le mascara ainsi qu'entre l'applicateur et la zone à maquiller. Enfin, les hauteurs maximales de fosse décrites évitent sur l'applicateur la formation de zones dans lesquelles le mascara serait inaccessible pour le maquillage tout en permettant la formation de réserves de mascara qui seront, elles, utiles pour le maquillage.

On peut noter que la mise en oeuvre d'un post-traitement est avantageuse puisqu'elle permet de réduire la hauteur maximale de creux et évite donc l'accumulation de mascara dans ceux-ci.

De telles différences entre un applicateur selon l'invention et un applicateur injecté sont visibles notamment sur les figures 2A et 2B, ainsi que sur les figures 4A, 5A et 6A.

Bien entendu, on pourra apporter à l'invention de nombreuses modifications sans sortir du cadre de celle-ci.

Les modes de réalisation présentés ci-dessus concernent des applicateurs de mascara. On peut envisager qu'il s'agisse d'autres applicateurs de produit cosmétique, par exemple des applicateurs de produit cosmétique pour les lèvres, pour la peau ou pour les sourcils.

On a décrit ici un mode de fabrication par synthèse additive, la fusion sur lit de poudre. On peut envisager que d'autres procédés de fabrication par synthèse additive soient utilisés.

On a décrit ici le cas d'un applicateur de produit cosmétique mais on peut envisager qu'un applicateur selon l'invention puisse être utilisé pour un autre produit liquide ou semi-liquide, c'est-à-dire un produit dont la viscosité va de 0,01 Pa.S à près de 100 Pa.S.

**Revendications**

1. Procédé de fabrication d'un applicateur (1) de produit cosmétique comprenant un corps et des protubérances par une méthode de fabrication additive à base de poudre,

   comprenant au moins une étape de sélections de grains de poudre dont une plus grande dimension est inférieure à 80,0 $\mu$m,
   une étape de synthèse additive avec les grains de poudre sélectionnés, et
   optionnellement un post-traitement consistant en un sablage ou un nettoyage par ultrasons ;
   de façon à obtenir, sans autre post-traitement, un applicateur pour lequel une hauteur moyenne arithmétique $S_a$ d'une surface de l'applicateur sur au moins une portion A de l'applicateur est comprise entre 15,0 et 30,0 $\mu$m, cette hauteur étant calculée suivant la formule suivante :

$$S_a = \frac{1}{A} \iint\limits_A |z(x,y)| \, \mathrm{d}x\mathrm{d}y$$

dans laquelle :

A est la portion de l'applicateur prise en compte et comprend une ou plusieurs des protubérances ou parties de protubérances, et

x, y et z représentent les coordonnées de la surface de l'applicateur dans un système orthogonal de coordonnées cartésiennes avec z correspondant à un axe de mesure de la hauteur.

2. Procédé selon la revendication 1, dans lequel l'étape de synthèse additive est réalisée par fusion sur lit de poudre.

3. Procédé selon la revendication 1 ou la revendication 2, dans lequel la sélection des grains est effectuée par tamisage.

4. Procédé selon l'une des revendications précédentes, dans lequel le post-traitement consiste en un sablage, et dans lequel le sablage est réalisé dans une cabine de sablage automatique par tonneau, de préférence le sablage étant réalisé par microbillage.

5. Procédé selon la revendication 4, dans lequel des médias abrasifs dont des grains présentent une plus grande dimension comprise entre 4,0 et 140,0 $\mu$m sont utilisées.

6. Procédé selon la revendication 5, dans lequel les media abrasifs utilisés sont choisis parmi au moins :

   - des microbilles, par exemple des microbilles de verres ou de céramiques ;
   - du bicarbonate de soude ; ou
   - des noyaux de fruits compressés.

7. Procédé selon l'une des revendications précédentes, dans lequel le post-traitement consiste en un nettoyage par ultrasons, dans lequel les ultrasons utilisés présentent une fréquence comprise entre 25 kHz et 45 kHz.

8. Procédé selon l'une quelconque des revendications précédentes, dans lequel la poudre est choisie parmi les polymères thermoplastiques de la famille des polyamides aliphatiques.

9. Procédé selon l'une quelconque des revendications précédentes, dans lequel le post-traitement optionnel est réalisé si besoin pour obtenir une hauteur maximale de fosse $S_v$ de la surface de l'applicateur sur la portion A inférieure à 200 $\mu$m, et de préférence comprise entre 80 et 150 $\mu$m.

**Patentansprüche**

1. Verfahren zum Herstellen eines Applikators (1) für ein Kosmetikprodukt, der einen Körper und Erhöhungen umfasst, durch ein pulverbasiertes additives Herstellungsverfahren,

   umfassend mindestens einen Schritt des Auswählens von Pulverkörnern, deren größte Abmessung kleiner als 80,0 $\mu$m ist,
   einen Schritt der additiven Synthese mit den ausgewählten Pulverkörnern, und
   optional eine Nachbehandlung, bei der es sich um Sandstrahlen oder Ultraschallreinigung handelt;
   um ohne weitere Nachbehandlung einen Applikator zu erhalten, für den eine arithmetische mittlere Höhe $S_a$ einer Oberfläche des Applikators über mindestens einen Teil A des Applikators zwischen 15,0 und 30,0 $\mu$m beträgt, wobei diese Höhe mit der folgenden Formel berechnet wird:

$$S_a = \frac{1}{A} \iint_A |z(x,y)| \, dx \, dy$$

   wobei:

   A der Teil des Applikators ist, der berücksichtigt wird und einen oder mehrere der Erhöhungen oder Teile von Erhöhungen umfasst, und
   x, y und z die Koordinaten der Oberfläche des Applikators in einem orthogonalen kartesischen Koordinatensystem darstellen, wobei z einer Höhenmessachse entspricht.

2. Verfahren nach Anspruch 1, wobei der Schritt der additiven Synthese durch Pulverbettfusion durchgeführt wird.

**EP 3 487 357 B1**

3. Verfahren nach Anspruch 1 oder Anspruch 2, wobei die Auswahl der Körner durch Sieben vorgenommen wird.

4. Verfahren nach einem der vorhergehenden Ansprüche, wobei es sich bei der Nachbehandlung um Sandstrahlen handelt und wobei das Sandstrahlen in einer automatischen Sandstrahlkabine tonnenweise durchgeführt wird, wobei das Sandstrahlen vorzugsweise durch Mikroperlenstrahlen durchgeführt wird.

5. Verfahren nach Anspruch 4, wobei Schleifmittel verwendet werden, deren Körner eine größte Abmessung zwischen 4,0 und 140,0 μm aufweisen.

6. Verfahren nach Anspruch 5, bei dem die verwendeten Schleifmittel aus mindestens Folgendem ausgewählt sind:

   - Mikroperlen, beispielsweise Mikroperlen aus Glas oder Keramik;
   - Natron; oder
   - zusammengepressten Fruchtkernen.

7. Verfahren nach einem der vorhergehenden Ansprüche, wobei es sich bei der Nachbehandlung um eine Ultraschallreinigung handelt, bei der der verwendete Ultraschall eine Frequenz zwischen 25 kHz und 45 kHz aufweist.

8. Verfahren nach einem der vorhergehenden Ansprüche, wobei das Pulver aus thermoplastischen Polymeren der Familie der aliphatischen Polyamide ausgewählt ist.

9. Verfahren nach einem der vorhergehenden Ansprüche, wobei die optionale Nachbearbeitung gegebenenfalls durchgeführt wird, um eine maximale Grabenhöhe Sv der Oberfläche des Applikators auf dem Abschnitt A zu erhalten, die kleiner als 200 μm ist und vorzugsweise zwischen 80 und 150 um beträgt.

**Claims**

1. A method for manufacturing a cosmetic product applicator (1) comprising a body and protuberances by a powder-based additive manufacturing method,

   comprising at least one step of selecting powder grains whose largest dimension is smaller than 80.0 μm,
   a step of additive synthesis with the selected powder grains, and
   optionally a post-treatment consisting of sandblasting or cleaning by ultrasounds;
   so as to obtain, without any other post-treatment, an applicator for which an arithmetic mean height $S_a$ of a surface of the applicator over at least one portion A of the applicator is comprised between 15.0 and 30.0 μm, this height being calculated according to the following formula:

$$S_a = \frac{1}{A} \iint_A |z(x,y)| dx dy$$

   wherein:

   A is the considered portion of the applicator and comprises one or more of the protuberance (s) or protuberance portion(s), and
   x, y and z represent the coordinates of the surface of the applicator in an orthogonal system of Cartesian coordinates, with z corresponding to a measurement axis of the height.

2. The method according to claim 1, wherein the additive synthesis step is carried out by powder bed fusion.

3. The method according to claim 1 or claim 2, wherein the selection of the grains is performed by sieving.

4. The method according to one of the preceding claims, wherein the post-treatment consists of sandblasting, and wherein the sandblasting is carried out in an automatic drum sandblasting cabinet, the sandblasting being preferably carried out by bead-blasting.

5. The method according to claim 4, wherein abrasive media including grains having a largest dimension comprised between 4.0 and 140.0 $\mu$m are used.

6. The method according to claim 5, wherein the used abrasive media are selected at least from among:

   - microbeads, for example glass or ceramic microbeads;
   - sodium bicarbonate; or
   - compressed fruit stones.

7. The method according to one of the preceding claims, wherein the post-treatment consists of cleaning by ultrasounds, wherein the used ultrasounds have a frequency comprised between 25 kHz and 45 kHz.

8. The method according to any one of the preceding claims, wherein the powder is selected from among thermoplastic polymers of the aliphatic polyamide family.

9. The method according to any one of the preceding claims, wherein the optional post-treatment is carried out, where necessary, to obtain a maximum pit height $S_v$ of the surface of the applicator over the portion A smaller than 200 $\mu$m, and preferably comprised between 80 and 150 $\mu$m.

**Fig. 1**

**Fig. 2A**

**Fig. 2B**

Fichier numérique
de la géométrie de
l'applicateur à réaliser

Pré-traitement
Tamisage
Séparation des
gros grains

Fabrication
additive par
fusion d'un lit
de poudre

Sablage à
l'aide d'une
sableuse
à tonneau

Nettoyage
par ultrasons

**Fig. 3**

**Fig. 4A**

**Fig. 4B**

**Fig. 4C**

**Fig. 4D**

**Fig. 5A**

**Fig. 5B**

**Fig. 5C**

**Fig. 5D**

Fig. 6A

Fig. 6B

Fig. 6C

Fig. 6D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012166777 A